# EUROPEAN PATENT SPECIFICATION

(11) **EP 2 640 003 B1**
(45) Date of publication and mention of the grant of the patent: **14.05.2014**
(21) Application number: 12159626.6
(22) Date of filing: 15.03.2012
(51) Int. Cl.: H04L 12/24

(54) **Network with a network wide extended policy framework**
Netzwerk mit einem netzwerkweiten erweiterten Richtlinienrahmenwerk
Réseau avec un cadre de politique étendue à l'ensemble du réseau

(43) Date of publication of application: 18.09.2013
(73) Proprietor: ADVA Optical Networking SE, 82152 Martinsried / München (DE)
(72) Inventor: Bryskin, Igor, Great Falls, VA Virginia 22066 (US); Beeram, Vishnu, Fairfax, VA Virginia 22033 (US); Doonan, Wes, Fairfax, VA Virginia 22033 (US)
(74) Representative: Isarpatent

(56) References cited:
- EP-A1- 1 538 777
- US-A1- 2004 193 912
- US-A1- 2008 247 314
- DURHAM D ET AL: "The COPS (Common Open Policy Service) Protocol; rfc2748.txt", 20000101, 1 January 2000 (2000-01-01), XP015008531, ISSN: 0000-0003
- MOLKA GHARBAOUI ET AL: "Behavior-Based Policies for Preserving Confidentiality in PCE-based Multi-domain MPLS Networks", POLICIES FOR DISTRIBUTED SYSTEMS AND NETWORKS (POLICY), 2011 IEEE INTERNATIONAL SYMPOSIUM ON, IEEE, 6 June 2011 (2011-06-06), pages 81-88, XP032008134, DOI: 10.1109/POLICY.2011.15 ISBN: 978-1-4244-9879-6

## Description

### TECHNICAL BACKGROUND

Network operators control networks via network and service management means. There are various network policy frameworks such as described in RFC 2251 or the X500 directory access protocol (ISO/IEC 9594) which constitute large and complex software packages. This kind of conventional network policy frameworks are not only complex but also require a significant amount of memory and processing capacity. These conventional network policy frameworks are used mainly for providing policy management on hosts and servers but are normally not installed on network elements of the network. Other conventional network policy frameworks such as based on COPS (RFC 2748) are lacking functionalities such as a dynamic mutual auto-discovery of policy decision points PDP and policy enforcement points PEP. In the conventional network policy frameworks policy decision points PDPs cannot identify and correct configuration errors. Further, the policy decision points PDPs are not able to assign configured values dynamically or react in an appropriate manner to real time network events such as outages and other unplanned events within the network.

EP 1 538 777 discloses a communication network that comprises a plurality of self-configurable network equipment each comprising a self-configuration means arranged to acquire a new configuration to establish and a configuration management device coupled to the self-configuration means and arranged, when it is warned of an acquirement of new configuration parameters by the self-configuration means, to transmit configuration data representative of these configuration parameters to a network repository connected to a network configuration analysis device. So, the network configuration analysis device can check whether transmitted configuration data are consistent with the previously transmitted data representative of the configuration parameters of other self-configurable network equipment of the network.

Accordingly, there is a need for a network wide extended policy framework which overcomes the above-mentioned drawbacks.

### SUMMARY OF THE INVENTION

The invention provides a network with a network wide extended policy framework comprising:
path computation clients each being associated with at least one local policy enforcement point,
path computation servers associated with at least one policy decision point,
wherein the policy enforcement points and said at least one policy decision point are adapted to exchange attributes which are determined by at least one policy decision point, wherein at least one policy decision point is adapted to identify a group of network elements and/or network services requiring an identical set of configuration parameters by evaluating parameters advertised into the network and to update a policy related to said identified group in case of a detected configuration error,
wherein said updated policy is distributed by the policy decision point in a policy notification to the policy enforcement points associated with the network elements and/or network services of said identified group; and
wherein said policy enforcement points receiving said policy notification comprising said updated policy from said policy decision point are adapted to translate the received updated policy into configuration settings of said network elements and/or network services of said identified group.

In a possible embodiment of the network according to the present invention a policy decision point is adapted to update a policy related to said identified group of network elements and/or network services in real time in response to a detected real time network event.

In a possible embodiment of the network according to the present invention a path computation client of said network comprises a client application requesting a path computation to be performed by a path computation server.

In a further possible embodiment of the network according to the present invention the path computation server of said network is adapted to compute a network path based on a topology of a network domain of said network and the information received in response to said path computation request.

In a further possible embodiment of the network according to the present invention the policy decision point of the network has access to a traffic engineering database which comprises traffic engineering information including network element and/or network service attributes advertised by network element's of said network domain of said network.

In a further possible embodiment of the network according to the present invention traffic engineering information stored in the traffic engineering database comprises topology data and resource information data of the network domain.

In a further possible embodiment of the network according to the present invention a policy decision point is adapted to detect a configuration error if network elements and/or network services advertise conflicting configuration parameter values as attributes.

In a further possible embodiment of the network according to the present invention the policy decision point is adapted to detect a configuration error if the same network address or the same network element identification is advertised as attributes by two or more network elements of the same network domain of said network.

In a further possible embodiment of the network according to the present invention the policy decision point is adapted to distribute a request for an automatic reconfiguration with non-conflicting configuration parameter values to the policy enforcement points associated with the network elements and/or network services of the network domain.

In a further possible embodiment of the network according to the present invention the policy decision point is adapted to update a resource classification and/or configuration policy in response to a detected network element failure.

In a further possible embodiment of the network according to the present invention the policy decision point is adapted to update a policy to instruct network elements to reconfigure their links by adding or removing said links and/or bandwidth advertised by said links depending on a detected current date traffic load.

The invention further provides a policy decision point for a network comprising:
an identification module adapted to identify a group of network elements and/or network services requiring an identical set of configuration parameters by evaluating advertised attributes;
a detection module adapted to detect a configuration error on the basis of the configuration parameters; and
a policy updating module adapted to update a policy related to said identified group of network elements and/or network services in case of a detected configuration error.

In a possible embodiment of the policy decision point according to the present invention the policy decision point of the network has access to a traffic engineering database comprising traffic engineering information including network element and/or network service attributes advertised by network elements of a network domain of the network.

In a further possible embodiment of the policy decision point according to the present invention the policy updating module is adapted to update dynamically the policy related to said identified group of network elements and/or network services in response to a detected real time network event affecting a network element and/or a network service of the identified group.

The invention further provides a method for performing a network policy control for a network comprising path computation clients associated with at least one local policy enforcement point and path computation servers associated with at least one policy decision point,
wherein the method comprises the steps of:
determining attributes exchanged between policy enforcement points and policy decision points;
identifying by said policy decision point a group of network elements and/or network services requiring an identical set of configuration parameters by evaluating said advertised attributes to update a policy related to said identified group in case of a detected configuration error;
distributing by said policy decision point the updated policy in a policy notification to the policy enforcement points associated with the identified group of network elements and/or network services; and
translating by said policy enforcement point locally the updated policy within the received policy notification into configuration settings of the network elements and/or network services of the identified group.

In a possible embodiment of the method according to the present invention the policy decision point updates a policy related to the identified group of network elements and/or network services in real time in response to a detected real time or scheduled network event affecting a network element and/or a network service of the identified group.

In a further possible embodiment of the method according to the present invention the attributes comprising network element attributes and/or network service attributes are exchanged between the policy enforcement points and the policy decision points by means of an extended path computation element communication protocol.

In a further possible embodiment of the method according to the present invention the updated policy is distributed by the policy decision point to said policy enforcement points within policy notifications by means of the extended path computation element communication protocol.

The invention further provides a computer program comprising instructions for performing a method for performing a network policy control for a network comprising path computation clients associated with at least one local policy enforcement point and path computation servers associated with at least one policy decision point,
wherein the method comprises the steps of:
determining attributes exchanged between policy enforcement points and policy decision points,
identifying by said policy decision point a group of network elements and/or network services requiring an identical set of configuration parameters by evaluating said advertised attributes to update a policy related to said identified group in case of a detected configuration error;
distributing by said policy decision point the updated policy in a policy notification to the policy enforcement points associated with the identified group of network elements and/or network services; and
translating by said policy enforcement point locally the updated policy within the received policy notification into configuration settings of said network elements and/or network services of said identified group.

The invention further provides a data carrier which stores such a computer program for performing a network policy control for a network.

### BRIEF DESCRIPTION OF FIGURES

In the following possible embodiments of the network with a network wide extended policy framework for a method for performing a network policy control for such a network are described with reference to the enclosed figures.
Fig. 1 shows an exemplary embodiment of a network with a network wide extended policy framework according to the present invention;
Fig. 2 shows a block diagram of a possible embodiment of a policy decision point according to the present invention as employed by the network shown in Fig. 1;
Fig. 3 shows a flow chart for illustrating a possible embodiment of a method for performing a network policy control according to the present invention.

### DETAILED DESCRIPTION OF EMBODIMENTS

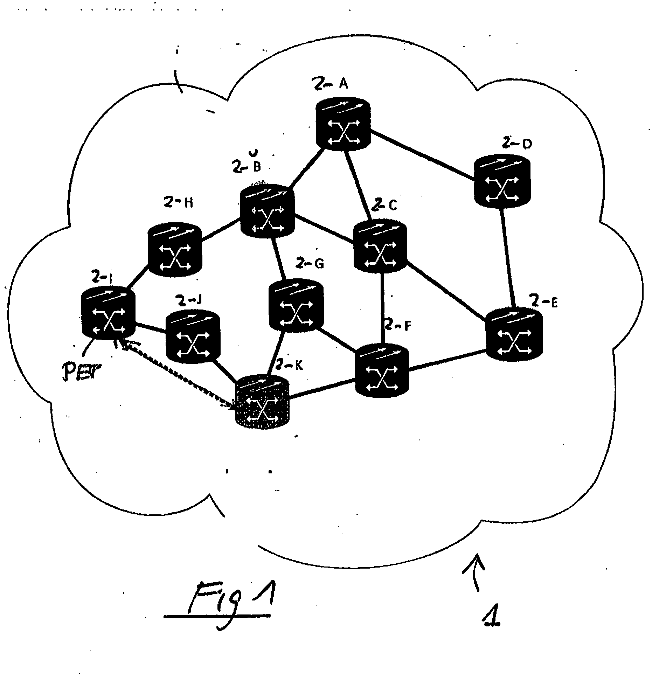

As can be seen in Fig. 1 a network 1 can comprise a plurality of network elements communicating with each other via links. The network elements can comprise network entities such as network nodes connected to each other via wireless or wired links. As shown in embodiment of Fig. 1 several nodes 2-A to 2-K are shown linked to each other via bidirectional data links. The network 1 comprises path computation clients PCCs associated with at least one local policy enforcement point PEP and path computation servers PCSs associated with at least one policy decision point PDP. The network 1 comprises at least one policy decision point PDP. As shown in example of Fig. 1 node 2-B and the node 2-K each form a policy decision point PDP, wherein the node 2-B operates for example as a backup power decision point PDP. In the network 1 according to the present invention each path computation client PCC can be associated with at least one local policy enforcement point PEP. The path computation client PCC can be any client application requesting a path computation to be performed by a path computation element PCE or a local policy enforcement point PEP. The path computation element or policy enforcement point PEP can be formed by an entity such as a component application or network node that is capable of computing a network path or route, for example based on a network graph applying computational constraints. The network 1 further comprises path computation servers PCSs associated with at least one policy decision point PDP. The path computation clients PCCs and the path computation servers PCSs are adapted to exchange attributes advertised to the at least one policy decision point PDP such as the policy decision point 2-K shown in Fig. 1. The policy decision point PDP such as the policy decision point 2-K is adapted to identify a group of network elements or network services within the network 1 requiring an identical set of configuration parameters CP by evaluating the received advertised attributes and to update a policy related to said identified group of network elements and/or network services in case of a detected configuration error.

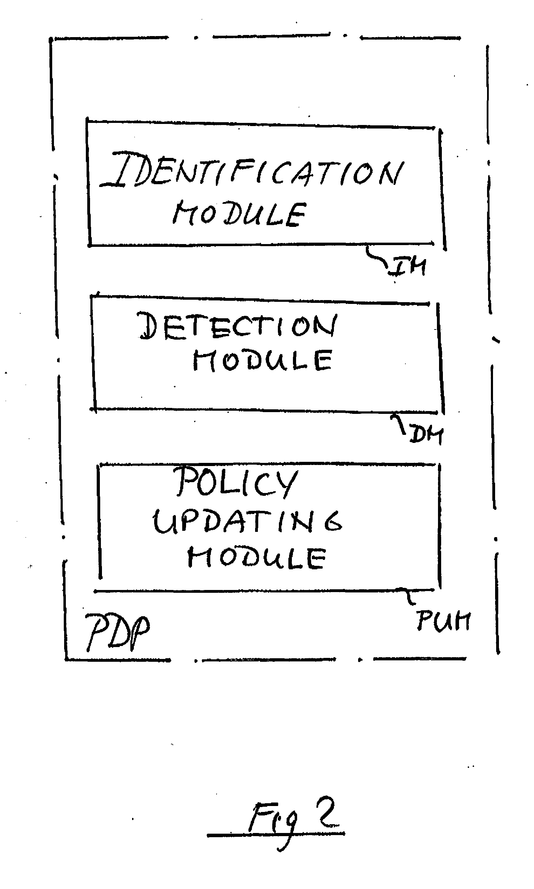

Fig. 2 shows a block diagram of a possible embodiment of a policy decision point PDP such as the policy decision point 2-K shown in Fig. 1. As can be seen in Fig. 2 the policy decision point PDP comprises an identification module IM adapted to identify a group of network elements and/or network services requiring an identical set of configuration parameters CP wherein the identification module IM identifies the group of network elements and/or network services requiring an identical set of configuration parameters CP by evaluating the advertised attributes. These attributes are exchanged between the path computation clients PCCs and the path computation servers PCSs and are advertised to the policy decision point PDP. The policy decision point PDP further comprises a detection module DM adapted to detect a configuration error on the basis of the configuration parameters CPs provided by the identification module IM. The policy decision point PDP further comprises a policy updating module PUM adapted to update a policy related to the identified group of network elements and/or network services in case of a detected configuration error. The policy decision point PDP of the network 1 can have access to a traffic engineering database TED comprising traffic engineering information including network element or network service attributes advertised by the network elements of a network domain of the network 1. The policy updating module PUM is adapted to update dynamically the policy related to the identified group of network elements and/or network services in response to a detected real time or scheduled network event affecting a network element and/or a network service of the identified group of network elements or network services.

The updated policy provided by the policy updating module PUM is distributed by the policy decision point PDP such as the policy decision point 2-K of the network 1 in at least one policy notification to the policy enforcement points PEPs associated with the network elements and/or network services of the identified group. A policy enforcement point PEP such as the policy enforcement point 2-I as shown in Fig. 1 receiving the policy notification comprising the updated policy from the policy decision point PDP 2-K is adapted to translate the received updated policy into configuration settings of the network elements or network services of the identified group.

The policy decision point PDP can detect a configuration error if network elements and/or network services in the network 1 advertise conflicting configuration parameter values as attributes. The detection is performed by the detection module DM of the policy decision point PDP as shown in Fig. 2. The detection module DM detects a configuration error, for example if the same network address or the same network element identification is advertised as attributes by two or more network elements of the same network domain of the respective network 1. In a possible embodiment the policy decision point PDP further distributes a request for an automatic reconfiguration with non-conflicting configuration parameter values to the policy enforcement points PEPs associated with the network elements or network services of the respective network domain. The policy decision point PDP is adapted in a possible implementation to update a resource classification or configuration policy in response to a detected network element failure. The policy decision point PDP can also update a policy to instruct network elements to reconfigure the links by adding or removing the links or bandwidth advertised by the links depending on a detected current data traffic load.

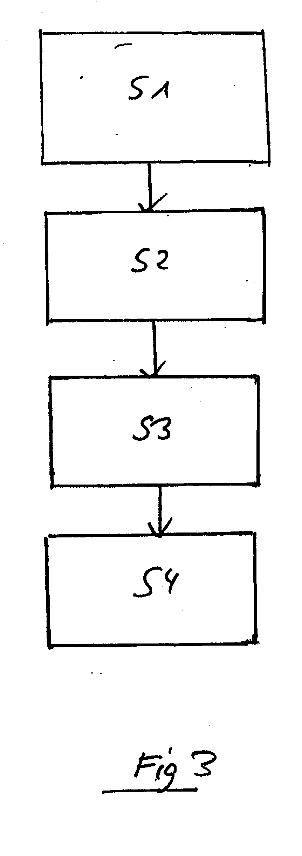

Fig. 3 shows a flow chart of a possible implementation of a method for performing a network policy control for a network such as network 1 according to the present invention.

In a first step S1 attributes which are exchanged between policy enforcement points PEPs with the at least one policy decision point PDP are determined. The attributes can comprise network element attributes or network service attributes exchanged between policy enforcement points PEPs and the policy decision point PDP such as the policy decision point 2-K in Fig. 1 by means of an extended path computation element communication protocol PCEP.

In a further step S2 a group of network elements and/or network services requiring an identical set of configuration parameters CPs are identified by the at least one policy decision point PDP 2-K by evaluating the advertised attributes to update a policy related to the identified group in case of a detected configuration error. In a possible implementation the policy decision point PDP detects the configuration error if network elements or network services advertise conflicting configuration parameter values as attributes. For example, the policy decision point PDP can detect a configuration error, if the same network address of the same network element identification is advertised as attributes by two or more network elements of the same network domain within the network 1.

In a further step S3 the policy decision point PDP distributes the updated policy in a policy notification to the policy enforcement points PEPs associated with the identified group of network elements or network services. The updated policy can be distributed by the policy decision point through the policy enforcement point in step S3 within policy notifications by means of the extended path computation element communication protocol PCEP.

In a further step S4 the policy enforcement point PEP receiving the policy notification locally translates the updated policy into configuration settings of the network elements or network services of the identified group.

By means of the employed extended path computation element communication protocol PCEP the path computation clients PCCs and the path computation servers PCSs can exchange arbitrary information, in particular policy information. It is possible that the path computation clients PCCs and the path computation servers PCSs can also exchange path computation requests and responses. It is possible to designate one or more network path computation servers PCSs for network policy management purposes by associating them within one or more policy decision points PDPs. Further, every network path computation client PCC can be associated with one or several local policy enforcement points PEPs. It is possible to manage the network policies either locally on path computation clients PCCs or remotely from any network element connected to a path computation server PCS via the extended path computation element communication protocol PCEP. The policies from the path computation servers PCSs can be distributed to pertinent or associated path computation clients PCCs using the extended path computation element communication protocol PCEP so that the associated policy enforcement points PEPs can perform an automatic network element reconfiguration. The path computation servers PCSs can use intrinsic data stored in an associated traffic engineering database TED for the purposes of automatic detection of configuration errors and for the dynamic assignment of configuration parameters CPs and direct reaction to various real time network events.

In a possible embodiment the network 1 can be a transport wavelength division multiplexer WDM network with optical links between the network nodes. A transport wavelength division WDM network normally requires a great deal of tedious and error-prone manual configuration which has to be performed by highly qualified personnel. With the method according to the present invention the network configuration can be automated. This is achieved by using a network wide policy framework. A set of network element interfaces and/or services that require an identical set of configuration is identified. The configuration sequence and parameters CPs can be managed within a single repository associated with the policy decision point PDP and distributed to the policy enforcement points PEPs associated with each network element interface and/or service from the identified set wherein the policy enforcement point PEP locally translates the policies into actual local configurations.

Using a policy configuration server as a part of a network policy center has the advantage that as a consumer of the information stored in a domain traffic engineering database TED the policy configuration server is capable of integrating the traffic engineering information advertised into the network 1 by every network element of the network. Therefore, the path computation server PCS is capable of detecting configuration errors, for example if the same IP address or the same system name is advertised by two or more different network elements. The path computation server PCS can then request an automatic reconfiguration with non-conflicting values. As a centralized system a path computation server PCS is capable of assuring that non-conflicting values are assigned to network element attributes that can be dynamically assigned, for example, network unique shared risk node/link group IDs. Through the associated traffic engineering database TED the path computation server PCS is constantly kept aware of the operational configuration and status of all network elements of the network 1 enabling it to dynamically update the related policies. One example is updating resource classification policies in response to network failures. Another example is updating policies that instruct network elements to reconfigure the links by adding or removing capacity depending on the current traffic load. Likewise, through the standard PCS auto-discovery procedures the path computation clients PCCs and consequently all network elements can be updated in real time about the state or status of all path computation servers PCSs performing the policy control function. Consequently, a PDP/PEP mutual auto-discovery can be provided without any additional efforts. The employed path computation element communication protocol PCEP is a reliable bidirectional protocol which also can address all the necessary security and authentication requirements of the policy framework. Therefore, it provides an adequate PDP/PEP communication mechanism. The existing PCS redundancy infrastructure also makes it possible to meet the necessary high availability requirements for a policy management center. In a possible embodiment network 1 can be an MPLS/MPLS TE-enabled network. This network can comprise a designated PCS node acting as the policy decision point PDP and another path computation server PCS acting as a backup policy decision point PDP. For example, in the network of Fig. 1 the policy decision point PDP can be formed by the policy decision point 2-K and the backup policy decision point PDP might be formed by the network node 2-B. The method according to the present invention allows to update a default value of an entity globally across the network 1. If, for example, the default RSVP refresh interval is 30 seconds for all RSVP enabled interfaces in the network 1 and there are e.g. 1.000 such interfaces in the network 1 spread across 200 nodes, an operator might decide to change the existing refresh interval of 30 seconds to a new refresh interval having 40 seconds. In this example the operator initiates a policy on the policy decision point PDP to update the refresh interval on all RSVP enabled interfaces in the network 1. Then the policy decision point PDP sends a policy notification via the extended PCEP to all policy enforcement points PEPs in the network 1. The policy enforcement points PEPs enforce the policy locally by updating the RSVP refresh interval on all local RSVP enabled interfaces.

The method of the present invention further allows selective updates, i.e. updating an existing policy selectively across the network 1. If, for example, a current recovery policy for wavelength division multiplexing WDM services in the network is to have no "restoration" capability and a customer X wants all the services of (e.g. all 100 of them) carrying his traffic to have "restoration" capability the policy enforcement is performed as follows. First, the operator initiates a policy on the policy decision point PDP to make all the services catering to customer X be "restorable". In a further step the policy decision point PDP sends a policy notification via the extended PCEP to all the policy enforcement points PEPs that are carrying services pertinent to customer X. Finally, the policy enforcement points PEPs enforce the policy locally by updating the recovery policy of all the services belonging to customer X.

## Claims

1. A network (1) with a network wide extended policy framework comprising:
(a) path computation clients (PCCs) each being associated with at least one local policy enforcement point (PEP);
(b) path computation servers (PCSs) associated with at least one policy decision point (PDP);
(c) wherein said policy enforcement points (PEPs) and said at least one policy decision point (PDP) are adapted to exchange attributes which are determined by said at least one policy decision point (PDP);
wherein said attributes are exchanged between the path computation clients (PCCs) and the path computation servers (PCSs) and are advertised to the policy decision point (PDP);
(d) wherein said policy decision point (PDP) is adapted to identify a group of network elements and/or network services requiring an identical set of configuration parameters by evaluating parameters advertised into the network (1) and to update a policy related to said identified group in case of a detected configuration error;
wherein said policy is updated dynamically in response to a detected real time or scheduled network event affecting a network element and/or a network service of the identified group,
(e) wherein said updated policy is distributed by said policy decision point (PDP) in a policy notification to the policy enforcement points (PEPs) associated with the network elements and/or network services of said identified group; and
(f) wherein said policy enforcement points (PEPs) receiving said policy notification comprising said updated policy from said policy decision point (PDP) are adapted to translate the received updated policy into configuration settings of said network elements and/or network services of said identified group.

2. The network (1) according to claim 1,
wherein said policy decision point (PDP) is adapted to update a policy related to said identified group of network elements and/or network services in real time in response to a detected real time network event.

3. The network (1) according to claim 1,
wherein said path computation client (PCC) of said network (1) comprises a client application requesting a path computation to be performed by said path computation server (PCS).

4. The network (1) according to claim 1,
wherein the path computation server (PCS) of said network (1) is adapted to compute a network path based on a topology of a network domain of said network (1) and the information received in response to said path computation request.

5. The network (1) according to claim 1,
wherein said policy decision point (PDP) of said network (1) has access to a traffic engineering database (TED) which comprises traffic engineering information including network element and/or network service attributes advertised by network elements of said network domain of said network (1).

6. The network (1) according to claim 5,
wherein said traffic engineering information stored in the traffic engineering database (TED) comprises topology data and resource information data of said network domain.

7. The network (1) according to claim 1,
wherein said policy decision point (PDP) is adapted to detect a configuration error if network elements and/or network services advertise conflicting configuration parameter values as attributes.

8. The network (1) according to claim 7,
wherein said policy decision point (PDP) is adapted to detect a configuration error if the same network address or the same network element identification is advertised as attributes by two or more network elements of the same network domain of said network (1).

9. The network (1) according to claim 7 or 8,
wherein said policy decision point (PDP) is adapted to distribute a request for an automatic reconfiguration with non-conflicting configuration parameter values to the policy enforcement points (PEPs) associated with the network elements and/or network services of said network domain.

10. The network (2) according to claim 2,
wherein said policy decision point (PDP) is adapted to update a resource classification and/or configuration policy in response to a detected network element failure.

11. The network (2) according to claim 2,
wherein said policy decision point (PDP) is adapted to update a policy to instruct network elements to reconfigure their links by adding or removing said links and/or bandwidth advertised by said links depending on a detected current data traffic load.

12. A policy decision point (PDP) for a network (1) comprising:
- an identification module (IM) adapted to identify a group of network elements and/or network services requiring an identical set of configuration parameters by evaluating advertised attributes;
- a detection module adapted to detect a configuration error on the basis of the configuration parameters;
- a policy updating module adapted to update a policy related to said identified group of network elements and/or network services in case of a detected configuration error,
wherein said policy updating module is adapted to update dynamically the policy related to said identified group of network elements and/or network services in response to a detected real time or scheduled network event affecting a network element and/or a network service of the identified group.

13. The policy decision point (PDP) according to claim 12,
wherein said policy decision point (PDP) of said network (1) has access to a traffic engineering database (TED) comprising traffic engineering information including network element and/or network service attributes advertised by network elements of a network domain of said network (1).

14. A method for performing a network policy control for a network (1) comprising path computation clients (PCCs) associated with at least one local policy enforcement point (PEP) and path computation servers (PCSs) associated with at least one policy decision point (PDP),
wherein the method comprises the steps of:
(a) determining attributes exchanged between path computation clients (PCCs) and path computation servers (PCSs) and advertised to policy decision points (PDPs);
(b) identifying by said policy decision point (PDP) a group of network elements and/or network services requiring an identical set of configuration parameters by evaluating said attributes to update a policy related to said identified group in case of a detected configuration error;
wherein said attributes are exchanged between the path computation clients (PCCs) and the path computation servers (PCSs) and are advertised to the policy decision point (PDP);
wherein said policy is updated dynamically in response to a detected real time or scheduled network event affecting a network element and/or a network service of the identified group,
(c) distributing by said policy decision point (PDP) the updated policy in a policy notification to the policy enforcement points (PEPs) associated with the identified group of network elements and/or network services; and
(d) translating by said policy enforcement point (PEP) locally the updated policy within the received policy notification into configuration settings of said network elements and/or network services of said identified group.

## Patentansprüche

1. Netzwerk (1) mit einem netzwerkweiten erweiterten Policy Framework, das Folgendes umfasst:
(a) Path Computation Clients (PCCs), die jeweils mit mindestens einem lokalen Policy Enforcement Point (PEP) verknüpft sind;
(b) Path Computation Server (PCSs), die mit mindestens einem Policy Decision Point (PDP) verknüpft sind;
(c) wobei die Policy Enforcement Points (PEPs) und der mindestens eine Policy Decision Point (PDP) dafür geeignet sind, Attribute auszutauschen, die durch den mindestens einen Policy Decision Point (PDP) bestimmt werden;
wobei die Attribute zwischen den Path Computation Clients (PCCs) und den Path Computation Servers (PCSs) ausgetauscht werden und dem Policy Decision Point (PDP) bekannt gegeben werden;
(d) wobei der Policy Decision Point (PDP) dafür geeignet ist, eine Gruppe von Netzwerkelementen und/oder Netzwerkdiensten festzustellen, die einen identischen Satz von Konfigurationsparametern verlangen, indem Parameter ausgewertet werden, die in das Netzwerk (1) hinein bekannt gegeben wurden, und eine Policy zu aktualisieren, welche die festgestellte Gruppe betrifft, falls ein Konfigurationsfehler detektiert wird;
wobei die Policy dynamisch in Reaktion auf ein detektiertes Echtzeit- oder planmäßiges Netzwerkereignis aktualisiert wird, welches sich auf ein Netzwerkelement und/oder einen Netzwerkdienst der festgestellten Gruppe auswirkt,
(e) wobei die aktualisierte Policy durch den Policy Decision Point (PDP) in einer Policy-Benachrichtigung an die Policy Enforcement Points (PEPs) verteilt wird, die mit den Netzwerkelementen und/oder Netzwerkdiensten der festgestellten Gruppe verknüpft sind; und
(f) wobei die Policy Enforcement Points (PEPs), welche die Policy-Benachrichtigung empfangen, welche die aktualisierte Policy von dem Policy Decision Point (PDP) umfasst, dafür geeignet sind, die empfangene aktualisierte Policy in Konfigurationseinstellungen der Netzwerkelemente und/oder Netzwerkdienste der festgestellten Gruppe zu übersetzen.

2. Netzwerk (1) nach Anspruch 1, wobei der Policy Decision Point (PDP) dafür geeignet ist, eine die festgestellte Gruppe von Netzwerkelementen und/oder Netzwerkdiensten betreffende Policy in Echtzeit als Reaktion auf ein detektiertes Echtzeit-Netzwerkereignis zu aktualisieren.

3. Netzwerk (1) nach Anspruch 1, wobei der Path Computation Client (PCC) des Netzwerks (1) eine Client-Anwendung umfasst, welche die Vornahme einer Pfadberechnung durch den Path Computation Server (PCS) verlangt.

4. Netzwerk (1) nach Anspruch 1, wobei der Path Computation Server (PCS) des Netzwerks (1) dafür geeignet ist, anhand einer Topologie einer Netzwerk-Domäne des Netzwerks (1) und der als Reaktion auf die Pfadberechnungsanforderung empfangenen Informationen einen Netzwerkpfad zu berechnen.

5. Netzwerk (1) nach Anspruch 1, wobei der Policy Decision Point (PDP) des Netzwerks (1) Zugang zu einer Traffic Engineering Database (TED) hat, die Datenverkehrslenkungs-Informationen umfasst, einschließlich Netzwerkelement- und/oder Netzwerkdienst-Attributen, die durch Netzwerkelemente der Netzwerk-Domäne des Netzwerks (1) bekannt gegeben wurden.

6. Netzwerk (1) nach Anspruch 5, wobei die in der Traffic Engineering Database (TED) gespeicherten Datenverkehrslenkungs-Informationen Topologiedaten und Ressourceninformationsdaten der Netzwerk-Domäne umfassen.

7. Netzwerk (1) nach Anspruch 1, wobei der Policy Decision Point (PDP) dafür geeignet ist, einen Konfigurationsfehler zu detektieren, wenn Netzwerkelemente und/oder Netzwerkdienste kollidierende Konfigurationsparameterwerte als Attribute bekannt geben.

8. Netzwerk (1) nach Anspruch 7, wobei der Policy Decision Point (PDP) dafür geeignet ist, einen Konfigurationsfehler zu detektieren, wenn dieselbe Netzwerkadresse oder dieselbe Netzwerkelement-Identifizierung als Attribute durch zwei oder mehr Netzwerkelemente derselben Netzwerk-Domäne des Netzwerks (1) bekannt gegeben wird.

9. Netzwerk (1) nach Anspruch 7 oder 8, wobei der Policy Decision Point (PDP) dafür geeignet ist, eine Anforderung für eine automatische Rekonfiguration mit nichtkollidierenden Konfigurationsparameterwerten an die Policy Enforcement Points (PEPs) zu verteilen, die mit den Netzwerkelementen und/oder Netzwerkdiensten der Netzwerk-Domäne verknüpft sind.

10. Netzwerk (2) nach Anspruch 2, wobei der Policy Decision Point (PDP) dafür geeignet ist, eine Ressourcenklassifikations- und/oder -konfigurations-Policy als Reaktion auf einen detektierten Netzwerkelement-Ausfall zu aktualisieren.

11. Netzwerk (2) nach Anspruch 2, wobei der Policy Decision Point (PDP) dafür geeignet ist, eine Policy zu aktualisieren, die Netzwerkelemente anweist, ihre Links zu rekonfigurieren, indem die Links und/oder Bandbreite, die durch die Links bekannt gegeben werden, in Abhängigkeit von einer detektierten aktuellen Datenverkehrslast hinzugefügt oder entfernt werden.

12. Policy Decision Point (PDP) für ein Netzwerk (1), der Folgendes umfasst:
- ein Identifizierungsmodul (IM), das dafür geeignet ist, eine Gruppe von Netzwerkelementen und/oder Netzwerkdiensten, die einen identischen Satz Konfigurationsparameter benötigen, durch Auswerten bekannt gegebener Attribute festzustellen;
- ein Detektionsmodul, das dafür geeignet ist, einen Konfigurationsfehler anhand der Konfigurationsparameter zu detektieren;
- ein Policy-Aktualisierungsmodul, das dafür geeignet ist, eine Policy, welche die festgestellte Gruppe von Netzwerkelementen und/oder Netzwerkdiensten betrifft, im Fall eines detektierten Konfigurationsfehlers zu aktualisieren,
wobei das Policy-Aktualisierungsmodul dafür geeignet ist, die zu der festgestellten Gruppe von Netzwerkelementen und/oder Netzwerkdiensten gehörende Policy als Reaktion auf ein detektiertes Echtzeit- oder planmäßiges Netzwerkereignis, das sich auf ein Netzwerkelement und/oder einen Netzwerkdienst der festgestellten Gruppe auswirkt, dynamisch zu aktualisieren.

13. Policy Decision Point (PDP) nach Anspruch 12, wobei der Policy Decision Point (PDP) des Netzwerks (1) Zugang zu einer Traffic Engineering Database (TED) hat, die Datenverkehrslenkungs-Informationen umfasst, einschließlich Netzwerkelement- und/oder Netzwerkdienst-Attributen, die durch Netzwerkelemente einer Netzwerk-Domäne des Netzwerks (1) bekannt gegeben wurden.

14. Verfahren zum Ausführen einer Netzwerk-Policy-Steuerung für ein Netzwerk (1), das Path Computation Clients (PCCs) umfasst, die mit mindestens einem lokalen Policy Enforcement Point (PEP) verknüpft sind, und Path Computation Server (PCSs) umfasst, die mit mindestens einem Policy Decision Point (PDP) verknüpft sind, wobei das Verfahren folgende Schritte umfasst:
(a) Bestimmen von Attributen, die zwischen Path Computation Clients (PCCs) und Path Computation Server (PCSs) ausgetauscht und an Policy Decision Points (PDPs) bekannt gegeben werden;
(b) Feststellen, durch den Policy Decision Point (PDP), einer Gruppe von Netzwerkelementen und/oder Netzwerkdiensten, die einen identischen Satz von Konfigurationsparametern verlangen, durch Auswerten der Attribute, um eine Policy zu aktualisieren, welche die festgestellte Gruppe betrifft, wenn ein Konfigurationsfehler detektiert wird;
wobei die Attribute zwischen den Path Computation Clients (PCCs) und den Path Computation Servers (PCSs) ausgetauscht und an den Policy Decision Point (PDP) bekannt gegeben werden;
wobei die Policy als Reaktion auf ein detektiertes Echtzeit- oder planmäßiges Netzwerkereignis, das sich auf ein Netzwerkelement und/oder einen Netzwerkdienst der festgestellten Gruppe auswirkt, dynamisch aktualisiert wird,
(c) Verteilen, durch den Policy Decision Point (PDP), der aktualisierten Policy in einer Policy-Benachrichtigung an die Policy Enforcement Points (PEPs), die mit der festgestellten Gruppe von Netzwerkelementen und/oder Netzwerkdiensten verknüpft sind; und
(d) lokales Übersetzen, durch den Policy Enforcement Point (PEP), der aktualisierten Policy innerhalb der empfangenen Policy-Benachrichtigung in Konfigurationseinstellungen der Netzwerkelemente und/oder Netzwerkdienste der festgestellten Gruppe.

## Revendications

1. Réseau (1) avec un cadre politique étendu à l'ensemble du réseau comprenant :
(a) des clients de calcul de chemin (PCC), chacun étant associé à au moins un point d'application de politique (PEP) local ;
(b) des serveurs de calcul de chemin (PCS) associés à au moins un point de décision de politique (PDP) ;
(c) dans lequel lesdits points d'application de politique (PEP) et ledit au moins un point de décision de politique (PDP) sont adaptés pour échanger des attributs qui sont déterminés par ledit au moins un point de décision de politique (PDP) ;
dans lequel lesdits attributs sont échangés entre les clients de calcul de chemin (PCC) et les serveurs de calcul de chemin (PCS) et sont annoncés au point de décision de politique (PDP) ;
(d) dans lequel ledit point de décision de politique (PDP) est adapté pour identifier un groupe d'éléments de réseau et/ou de services de réseau exigeant un ensemble identique de paramètres de configuration en évaluant des paramètres annoncés dans le réseau (1), et pour mettre à jour une politique liée audit groupe identifié dans le cas où une erreur de configuration est détectée ;
dans lequel ladite politique est mise à jour de manière dynamique en réponse à un événement de réseau en temps réel ou prévu détecté qui affecte un élément de réseau et/ou un service de réseau du groupe identifié,
(e) dans lequel ladite politique mise à jour est distribuée par ledit point de décision de politique (PDP) dans une notification de politique aux points d'application de politique (PEP) associés aux éléments de réseau et/ou services de réseau dudit groupe identifié ; et
(f) dans lequel lesdits points d'application de politique (PEP) recevant ladite notification de politique comprenant ladite politique mise à jour dudit point de décision de politique (PDP) sont adaptés pour traduire la politique mise à jour reçue dans les paramètres de configuration desdits éléments de réseau et/ou services de réseau dudit groupe identifié.

2. Réseau (1) selon la revendication 1, dans lequel ledit point de décision de politique (PDP) est adapté pour mettre à jour une politique liée audit groupe identifié d'éléments de réseau et/ou de services de réseau en temps réel en réponse à un événement de réseau en temps réel détecté.

3. Réseau (1) selon la revendication 1, dans lequel ledit client de calcul de chemin (PCC) dudit réseau (1) comprend une application client demandant qu'un calcul de chemin soit effectué par ledit serveur de calcul de chemin (PCS).

4. Réseau (1) selon la revendication 1, dans lequel le serveur de calcul de chemin (PCS) dudit réseau (1) est adapté pour calculer un chemin de réseau sur la base d'une topologie d'un domaine de réseau dudit réseau (1) et des informations reçues en réponse à ladite demande de calcul de chemin.

5. Réseau (1) selon la revendication 1, dans lequel ledit point de décision de politique (PDP) dudit réseau (1) a accès à une base de données d'ingénierie de trafic (TED) qui comprend des informations d'ingénierie de trafic incluant des attributs d'éléments de réseau et/ou de services de réseau annoncés par des éléments de réseau dudit domaine de réseau dudit réseau (1).

6. Réseau (1) selon la revendication 5, dans lequel lesdites informations d'ingénierie de trafic stockées dans la base de données d'ingénierie de trafic (TED) comprennent des données de topologie et des données d'informations de ressources dudit domaine de réseau.

7. Réseau (1) selon la revendication 1, dans lequel ledit point de décision de politique (PDP) est adapté pour détecter une erreur de configuration si des éléments de réseau et/ou des services de réseau annoncent des valeurs de paramètres de configuration contradictoires comme attributs.

8. Réseau (1) selon la revendication 7, dans lequel ledit point de décision de politique (PDP) est adapté pour détecter une erreur de configuration si la même adresse de réseau ou la même identification d'élément de réseau est annoncée comme attributs par deux éléments de réseau ou plus d'un même domaine de réseau dudit réseau (1).

9. Réseau (1) selon la revendication 7 ou 8, dans lequel ledit point de décision de politique (PDP) est adapté pour distribuer une demande de reconfiguration automatique avec des valeurs de paramètres de configuration non contradictoires aux points d'application de politique (PEP) associés aux éléments de réseau et/ou services de réseau dudit domaine de réseau.

10. Réseau (2) selon la revendication 2, dans lequel ledit point de décision de politique (PDP) est adapté pour mettre à jour une politique de classification et/ou de configuration des ressources en réponse à une défaillance d'élément de réseau détectée.

11. Réseau (2) selon la revendication 2, dans lequel ledit point de décision de politique (PDP) est adapté pour mettre à jour une politique pour charger des éléments de réseau de reconfigurer leurs liaisons en ajoutant ou en enlevant lesdites liaisons et/ou la bande passante annoncée par lesdites liaisons en fonction d'une charge de trafic de données actuelle détectée.

12. Point de décision de politique (PDP) pour un réseau (1) comprenant :
- un module d'identification (IM) adapté pour identifier un groupe d'éléments de réseau et/ou de services de réseau exigeant un ensemble identique de paramètres de configuration en évaluant des attributs annoncés ;
- un module de détection adapté pour détecter une erreur de configuration sur la base des paramètres de configuration ;
- un module de mise à jour de politique adapté pour mettre à jour une politique liée audit groupe identifié d'éléments de réseau et/ou de services de réseau dans le cas où une erreur de configuration est détectée,
dans lequel ledit module de mise à jour de politique est adapté pour mettre à jour de manière dynamique la politique liée audit groupe identifié d'éléments de réseau et/ou de services de réseau en réponse à un événement de réseau en temps réel ou prévu détecté affectant un élément de réseau et/ou un service de réseau du groupe identifié.

13. Point de décision de politique (PDP) selon la revendication 12, dans lequel ledit point de décision de politique (PDP) dudit réseau (1) a accès à une base de données d'ingénierie de trafic (TED) comprenant des informations d'ingénierie de trafic incluant des attributs d'éléments de réseau et/ou de services de réseau annoncés par des éléments de réseau d'un domaine de réseau dudit réseau (1).

14. Procédé pour effectuer un contrôle de politique de réseau pour un réseau (1) comprenant des clients de calcul de chemin (PCC) associés à au moins un point d'application de politique (PEP) local et des serveurs de calcul de chemin (PCS) associés à au moins un point de décision de politique (PDP),
dans lequel le procédé comprend les étapes consistant à :
(a) déterminer des attributs échangés entre des clients de calcul de chemin (PCC) et des serveurs de calcul de chemin (PCS) et annoncés à des points de décision de politique (PDP) ;
(b) identifier par ledit point de décision de politique (PDP) un groupe d'éléments de réseau et/ou de services de réseau qui exigent un ensemble identique de paramètres de configuration en évaluant lesdits attributs pour mettre à jour une politique liée audit groupe identifié dans le cas où une erreur de configuration est détectée ;
dans lequel lesdits attributs sont échangés entre les clients de calcul de chemin (PCC) et les serveurs de calcul de chemin (PCS) et sont annoncés au point de décision de politique (PDP) ;
dans lequel ladite politique est mise à jour de manière dynamique en réponse à un événement de réseau en temps réel ou prévu détecté qui affecte un élément de réseau et/ou un service de réseau du groupe identifié,
(c) distribuer par ledit point de décision de politique (PDP) la politique mise à jour dans une notification de politique aux points d'application de politique (PEP) associés au groupe identifié d'éléments de réseau et/ou de services de réseau ; et
(d) traduire par ledit point d'application de politique (PEP) localement la politique mise à jour dans la notification de politique reçue dans les paramètres de configuration desdits éléments de réseau et/ou services de réseau dudit groupe identifié.
